# EUROPEAN PATENT APPLICATION

(11) **EP 2 192 719 A1**
(43) Date of publication of application: **02.06.2010**
(21) Application number: 09177624.5
(22) Date of filing: 01.12.2009
(51) Int. Cl.: H04L 12/18, H04L 12/56

(54) **Method and system for providing source specific multicast service on Ethernet network**

(30) Priority: 01.12.2008 KR 20080120782; 14.08.2009 KR 20090075056
(71) Applicant: Electronics and Telecommunications Research Institute, Daejeon 305-350 (KR)
(72) Inventor: Park, Heuk, 305-761, Daejeon (KR); Lee, Soon Seok, 305-759, Daejeon (KR)
(74) Representative: Sieckmann, Dirk Christoph

(57) **Abstract**

There are provided a method and a system for providing a source specific multicast service on an Ethernet network. The system includes: a router managing a subscriber; a user terminal transmitting an IGMP packet to the router and transmitting channel reception information that uses an MAC address of the router as a destination MAC address; and an Ethernet switch receiving the channel reception information from the user terminal, determining whether there is a channel subscriber in a port to which the channel reception information has been input based on the contents of the channel reception information, and then outputting a frame that has a channel MAC address, which is the same as that of the channel reception information, as a destination address to the input port in a case where there is a channel subscriber in the input port.

## Description

### CROSS-REFERENCE TO RELATED APPLICATIONS

This application claims the priorities of Korean Patent Application Nos. 10-2008-0120782 filed on December 1, 2008, and 10-2009-0075056 filed on August 14, 2009, in the Korean Intellectual Property Office, the disclosures of which are incorporated herein by reference.

### BACKGROUND OF THE INVENTION

### Field of the Invention

The present invention relates to a method and a system for providing a multicast service on an Ethernet network, and more particularly, to a method and a system for providing a source specific multicast service on an Ethernet network.

### Description of the Related Art

A multicast mode as defined in Internet standards is configured by a combination of a protocol responsible for configuring a multicast tree configuration in an IP network and a protocol for managing subscribers. Various protocols have been developed for the tree configuration in a router layer, and at present, a PIM-SM (Protocol Independent Multicast - Sparse Mode) is attracting a great deal of attention.

In addition, as protocols used for a router in order to acquire a recipient group, an IGMP (Internet Group Management Protocol) for IPv4 and an MLD (Multicast Listener Discovery) protocol for IPv6 have been developed. Currently, Version 3 of the IGMP has been developed and corresponds to Version 2 of the MLD. The operational concepts of the IGMP and the MLD are similar to each other. Thus, hereinafter, description will be limited to the case of the IGMP.

The IGMP before Version 2 has a service model in which a source S transmits data to a multicast group G, and a recipient R subscribes to the multicast group. Such a service model is also called an ASM (Any Source Model). In this model, a recipient cannot determine whether or not to receive data from a specific source when subscribing to a multicast group, and an arbitrary sender can transmit data to any arbitrary multicast group unless it is limited based on a policy.

The PIM-SM supports the ASM model by using a method in which a router known as a Rendezvous Point (hereinafter, referred to as "RP") is arranged, all the recipients request for a subscription to a multicast group through the RP, and an arbitrary sender registers in the RP.

However, in many multicast applications such as IPTV or software distribution through the Internet, the address of the source can be acquired in an application registration process, such as a process of turning on a TV set. Accordingly, the ASM may not necessarily be used. In addition, in group applications, applications in which data is received from specific sources or specific groups are excluded are needed.

Thus, the TETF (Internet Engineering Task Force) allows a specific source to be selected or excluded in Version 3 of the IGMP. In addition, a source specific multicast (hereinafter, referred to as "SSM") also has been developed in an attempt to solve a bootstrap problem due to the RP, a shortest path problem, an extensibility problem in an MSDP (Multicast Source Discovery Protocol) and a security weakness problem, and the like by allowing a request for configuring a multicast tree to be directly sent to a source, rather than through the RP without any modification in the existing PIM-SM.

In order to support the SSM on the Ethernet network, two conditions are needed. First, an Ethernet switch must acquire a port in which there is a recipient of a corresponding channel. Second, the Ethernet switch must acquire the channel of a multicast frame transmitted from a source, that is, information on an ordered pair (S, G) and deliver the information to port in which there is a recipient of the corresponding channel. Here, S denotes the IP address of a source, and G denotes the IP address of a multicast group.

As a solution for the first problem, a case where an IGMP Proxy/Snooping function allowing the IGMP, which is an IP layer protocol, to be read is implemented in the Ethernet switch may be considered. However, the Ethernet switch performs a switching operation based on a destination MAC address of the Ethernet frame. Thus, the second problem cannot be easily solved even in a case where the IGMP Proxy/Snooping function of the Ethernet switch recognizes the IGMP version 3 and informs the Ethernet switch of the information.

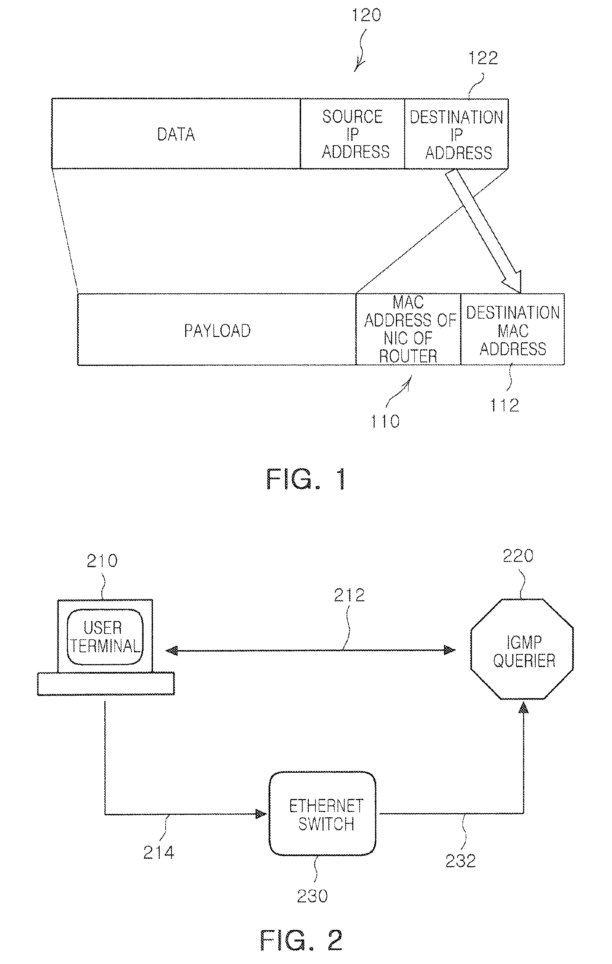

In other words, as shown in FIG. 1, a multicast Ethernet frame 110 is configured by mapping a multicast group address 122 as a destination address of a multicast IP packet 120 into a destination MAC address 112 of the Ethernet frame 110. Thus, the (S,G) information is not disclosed in the Ethernet frame 110, and, accordingly, forwarding cannot be performed based on the channel, that is, the (S,G) information in the Ethernet layer.

As a method to avoid the above-described problem, there is a method in which a VLAN on the basis of the (S,G) pair, that is, an SS-VLAN (Source Specific VLAN) is configured. However, in this method, time may be required for configuring a new VLAN each time the source is changed. In addition, a different VLAN is used for each (S,G) pair. Therefore, when the scale of the Ethernet network increases, there may be a problem of extensibility.

In addition, as another method, a method in which a channel, that is, a pair of a source IP and a multicast IP is mapped into one Ethernet MAC address has been proposed.

However, a method in which a channel subscriber is acquired through the IGMP Snooping in the Ethernet switch, and mapping the channel (S,G) and the MAC address is performed in the Ethernet switch causes a problem of extensibility. When mapping is performed by using a same method as is used in the existing multicast MAC by using a part of the source IPs and the multicast IPs or a hashing function, overlapping of an MAC address may occur. Furthermore, as the number of multicast services increases, the probability of the occurrence of such a problem increases.

On the other hand, in a case where a method in which a list of usable MAC addresses and channels are matched to each other in one to one correspondence other than the above-described method is used, the overlapping of the addresses can be fundamentally prevented. However, the correspondence relationship between a list of usable MAC addresses and channels should be known by all the Ethernet switches.

Accordingly, in order to respond to a service requiring a fast connection, an expected list must be acquired in advance, which can be an excessive burden in a case where the number of multicast services increases. When the list is updated each time a service request is made, the service speed may be lowered, and it is difficult to perpetually (consistently) maintain the lists included in many Ethernet switches in a dynamically changing environment.

### SUMMARY OF THE INVENTION

An aspect of the present invention provides a method and a system for providing a source specific multicast service on an Ethernet network which can support extensibility corresponding to increasing employment of multicast and appropriate channel switching speed.

According to an aspect of the present invention, there is provided a source specific multicast service providing system on an Ethernet network. The source specific multicast service providing system includes: a router managing a subscriber; a user terminal transmitting an IGMP packet to the router and transmitting channel reception information that uses an MAC address of the router as a destination MAC address; and an Ethernet switch receiving the channel reception information from the user terminal, determining whether there is a channel subscriber in a port to which the channel reception information has been input based on the contents of the channel reception information, and then outputting a frame that has a channel MAC address, which is the same as that of the channel reception information, as a destination address to the input port in a case where there is the channel subscriber in the input port.

According to another aspect of the present invention, there is provided a method of providing a source specific multicast service on an Ethernet network. The method includes: filtering channel reception information out of an input frame; checking a state of a subscriber connected to a port to which a message is input based on the message of the channel reception information; updating an address table that represents a channel MAC address assigned to a port based on the current state of the channel subscriber; and generating channel reception information based on the current state of the channel subscriber and the contents of the channel reception information and transmitting the generated channel reception information to a router.

As described above, according to an aspect of the present invention, by providing a method and a system for providing a source specific multicast service on an Ethernet network in which the MAC address of an IGMP querier is used as a destination MAC address, a process for checking an existing multicast path can be omitted. Accordingly, there is an advantage that service environments in which channel extension is easy and fast can be provided.

### BRIEF DESCRIPTION OF THE DRAWINGS

The above and other aspects, features and other advantages of the present invention will be more clearly understood from the following detailed description taken in conjunction with the accompanying drawings, in which:

FIG. 1 is a diagram representing a mapping relationship between an Ethernet packet and an IP packet in a typical multicast environment;

FIG. 2 is a diagram representing a source specific multicast service providing system on an Ethernet network according to an embodiment of the present invention;

FIG. 3 is a diagram representing a source specific multicast service providing system on an Ethernet network according to another embodiment of the present invention;

FIG. 4 is a diagram representing a source specific multicast service providing system on an Ethernet network according to another embodiment of the present invention;

FIG. 5 is a diagram illustrating the structure of channel reception information according to an embodiment of the present invention; and

FIG. 6 is a flowchart representing a method of providing a source specific multicast service on an Ethernet network according to an embodiment of the present invention.

### DETAILED DESCRIPTION OF THE PREFERRED EMBODIMENT

Hereinafter, exemplary embodiments of the present invention will be described in detail with reference to the accompanying drawings. When descriptions of a related known configuration or function will make the basic concept of the present invention defocused, the detailed descriptions thereof will be omitted here.

According to an embodiment of the invention, when a user wants to receive a Source Specific Multicast (hereinafter, referred to as "SSM") service through a network, the user needs (S, G) corresponding to each service and a negotiated MAC address for using the service through the Ethernet.

For example, in an IPTV service, a service provider can identify the IPTV service by one multicast IP address G and can identify each channel by source IP addresses S that are different from one another. Accordingly, the IPTV service needs an ordered pair (S,G) that represents each channel and an MAC address corresponding to the ordered pair.

When a user applies for the use of a service through a service provider's application server, the service provider's application server negotiates with a network provider's server and exchanges information on the ordered pair (S,G) to be used. In a case where an individual provides a service by using a personal computer, the service provider's application server corresponds to an application program of the personal computer. The exchange of information can be performed directly or can be performed through a service providing platform such as an IMS (IP Multimedia Subsystem).

The MAC address may be provided by being acquired by the service provider as a global address, or a predetermined amount of MAC addresses may be acquired by the network provider and used by being assigned from among the acquired MAC addresses as needed. Alternatively, (S,G) information may be mapped into a MAC address format by using a specific rule. When the exchange of information is completed, the network provider informs the user of a {((S,G), cMAC)} set that is used in the service. ((S,G) , cMAC) is an ordered pair that is configured by a channel MAC (cMAC) address corresponding to each (S,G), and the delivery of the information may be performed in various manners.

The present invention can be applied not only to an SSM model but also to an ASM (Any Source Multicast) model, that is, a system that uses IGMPv1 IGMPv2, or MLDv1. In a case where the ASM model is used, differently from the SSM model in which one MAC address is associated with one channel, one multicast address is associated with one MAC address, and a corresponding protocol mode and a corresponding MAC address are represented in a message that is included in the channel reception information.

FIG. 2 is a diagram representing a source specific multicast service providing system on an Ethernet network according to an embodiment of the present invention.

As shown in FIG. 2, the source specific multicast service providing system on the Ethernet network according to an embodiment of the present invention includes a user terminal 210, an IGMP querier 220, an Ethernet switch 230, and the like. Here, generally, the IGMP querier 220 represents a router that manages subscribers.

When transmitting an IGMP packet 212 to the IGMP querier 220, the user terminal 210 transmits the IGMP packet 212 in a message format that is transmitted between a source address and a destination address to the IGMP querier 220 and transmits the channel reception information 214 in which contents corresponding to the transmission is recorded in a message to the Ethernet switch 230. Accordingly, the IGMP packet 212 transparently passes through the Ethernet switch 230 and reaches the IGMP querier 220. Then, the IGMP querier 220 processes the IGMP packet 212.

The Ethernet switch 230 filters the channel reception information 214 of an input frame by using a logical link control (LLC) header value, which is included in the channel reception information 214, and determines whether there is a channel subscriber in a port to which the channel reception information 214 is input. When there is a channel subscriber in the input port, the Ethernet switch 230 updates an address table such that a frame having the same channel MAC address as the channel reception information 214 as a destination address is output to the input port.

In addition, the Ethernet switch 230 transmits the channel reception information 214 in the original format or in a summarized format 232 to the IGMP querier 220. Described in more detail, information generated by the Ethernet switch 230 has the MAC address of the IGMP querier 220 as the destination MAC address, and accordingly, the information is finally transmitted to the IGMP querier 220. In this embodiment of the present invention, it is assumed that the Ethernet switch 230 knows the syntax of the IGMP, and accordingly, the IGMP querier 220 does not generate an IGMP query as a separate frame.

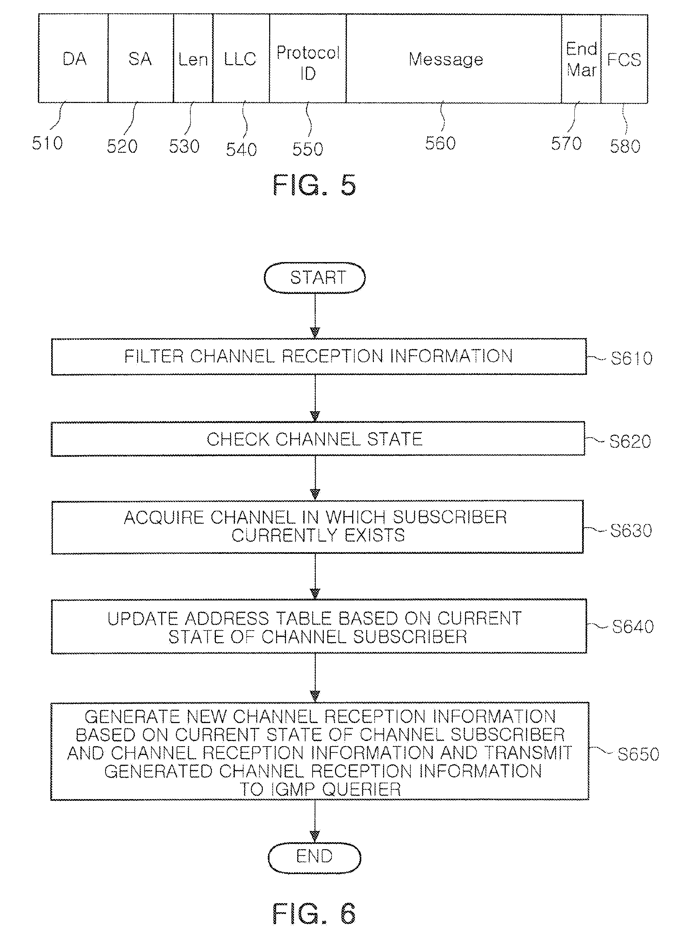

The contents of the IGMP packet 212 that is transmitted by the user terminal 210 in the SSM service may be a request (ALLOW) for allowing a channel or a channel set, a request (BLOCK) for blocking a channel or a channel set, or a request (TO_IN) for changing a channel or a channel set as a state change report used for reporting a change that occasionally occurs and may report (IS_IN), a channel or a channel set that is currently in the IN mode as a current state report that is a reply for a query transmitted by the IGMP querier 220. Accordingly, a mode (ALLOW, BLOCK, TO_IN, or IS_IN) and channel MAC addresses belonging to the mode should be notified by the message of the channel reception information 214. In order to represent this, as illustrated in FIG. 5, the message of the channel reception information 214 may be configured to represent a mode by an attribute event and channel MAC addresses belonging to the corresponding mode by an attribute value, by using the original format of the message of the GMRP frame.

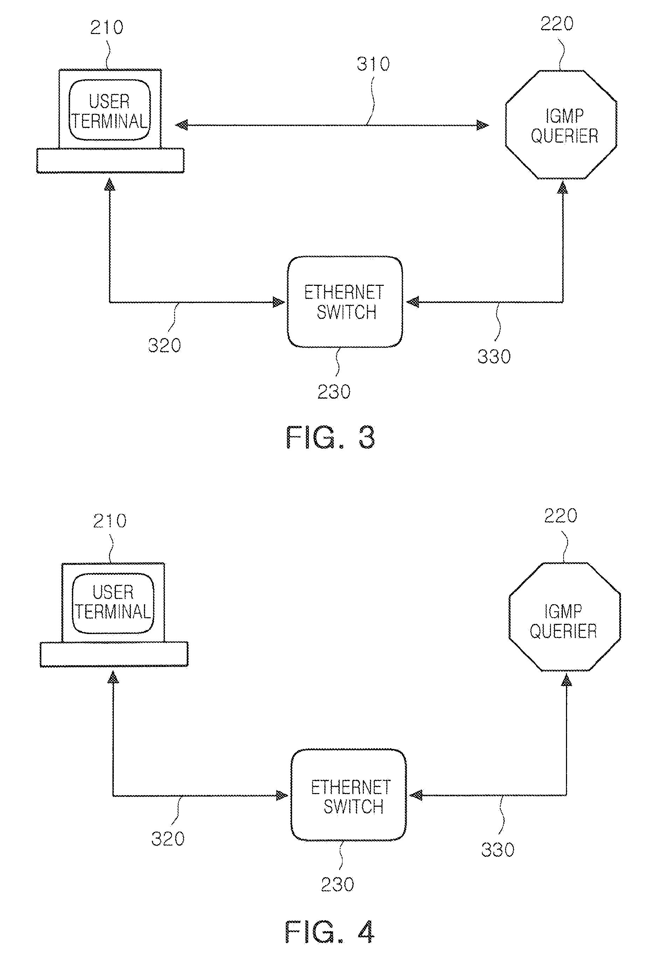

In another embodiment of the present invention, as shown in FIG. 3, a multicast tree of the Ethernet layer may be configured by using an additional complete Ethernet layer multicast protocol. In such a case, the Ethernet switch 230 may not necessarily use the IGMP. In this embodiment, the user terminal 210 communicates with the IGMP querier 220 so as to perform channel setting (Subscribe) and channel releasing (Unsubscribe) by using the IGMP protocol 310 and configures an SSM tree by using unique Ethernet layer protocols 320 and 330.

In addition, as another embodiment of the present invention, as shown in FIG. 4, only a multicast protocol of the Ethernet layer may be used. In such a case, the user terminal 210 requests for setting a channel and releasing a channel only by using the multicast protocol of the Ethernet layer. The IGMP querier 220 acquires the channel subscriber information of the IP layer by converting the result of the channel setting of the Ethernet layer into channel information (S,G) of the IP layer.

FIG. 5 is a diagram illustrating the structure of channel reception information according to an embodiment of the present invention.

As illustrated in FIG. 5, the channel reception information 214 according to an embodiment of the present invention is of a format similar to that of the GARP message. However, while a specific multicast MAC address is used as a destination MAC address in the GARP message, the MAC address of the IGMP querier 220 is used as a destination MAC address (DA: Destination Address) 510 in the channel reception information. In a case where there is a channel or a multicast source within the Ethernet network, the MAC address of the source may be used as a destination MAC address. As a source MAC address (SA: Source Address) 520, the MAC address of a transmission party is used. Length (Len) 530 is the same as an ordinary length of the Ethernet. As the value of the DSAP (Destination Service Access Point) and SSAP (Source Service Access Point) of the logical link control (LLC) 540, as in the GARP message, a value of 0x42 can be designated, respectively. By designating such a value, the Ethernet switch 230 can recognize that a corresponding frame is not a general data frame but a frame relating to a specific operation. In such a case, a value that is different from the general value of the GMRP or the GVRP is designated as the Protocol ID 550 for indicating a different protocol. The contents of the message 560 can be defined arbitrarily. The functions of an end marker (End Mar) 570 and a frame check sequence (FCS) 580 are the same as those of a general GARP. In other words, the end marker 570 represents the end of a message, and the frame check sequence 580 represents a general check field.

FIG. 6 is a flowchart representing a method of providing a source specific multicast service on an Ethernet network according to an embodiment of the present invention.

As shown in FIG. 6, the Ethernet switch 230 according to an embodiment of the invention filters the channel reception information 214 of an input frame in operation S610. In other words, in a case where the channel reception information 214 as illustrated in FIG. 5 is used, the Ethernet switch 230 can identify frames by using the logical link control 540 and the protocol ID 550 of the channel reception information 214.

The Ethernet switch 230 reads the message of the channel reception information 214 and checks the state of each channel in operation S620. Here, the message 560 of the channel reception information 214 represents four modes of a request (ALLOW) for allowing a channel or a channel set, a request (BLOCK) for blocking a channel or a channel set, or a request (TO_IN) for changing a channel or a channel set, and the current state (IS_IN). The message 560 of the channel reception information 214 includes a list of channel MAC addresses corresponding to a channel set corresponding to each mode.

The Ethernet switch 230 acquires the channel in which the current subscriber exists based on the contents of the message 560 of the channel reception information 214 in operation S630.

The Ethernet switch 230 updates an address table that represents the channel MAC address assigned to a port based on the current state of the channel subscriber in operation S640. Described in more detail, when there is a channel that receives a new subscription request (Subscribe), the Ethernet switch 230 updates the address table such that a frame having a channel MAC address, which is the same as that of the channel reception information including the new subscription request, as the destination address is output to the port to which the channel reception information including the new subscription request has been input. On the other hand, when there is a channel that receives a channel releasing request (Unsubscribe), in a case where there is not any other channel subscriber in the port to which the channel reception information including the channel releasing request (Unsubscribe) has been input, the Ethernet switch 230 deletes the entry from the address table such that a frame having a channel MAC address, which is the same as that of the channel reception information including the channel releasing request, as the destination address is not output to the input port.

Finally, the Ethernet switch 230 generates needed channel deception information based on the current state of the channel subscribers and the channel reception information and transmits the generated channel reception information to the IGMP querier 220 in operation S650. At this moment, the Ethernet switch 230 may be configured to check the channel reception information, copy the channel reception information, and transmit the channel reception information to the next destination.

While the present invention has been shown and described in connection with the exemplary embodiments, it will be apparent to those skilled in the art that modifications and variations can be made without departing from the scope of the invention. The exemplary embodiments disclosed here should be considered in descriptive sense only and not for purposes of limitation. Therefore, the scope of the invention is defined not by the exemplary embodiments of the invention but by the appended claims, and all differences within the scope will be construed as being included in the present invention.

## Claims

1. A source specific multicast service providing system on an Ethernet network comprising:
a router managing a subscriber;
a user terminal transmitting an IGMP packet to the router and transmitting channel reception information that uses an MAC address of the router as a destination MAC address; and
an Ethernet switch receiving the channel reception information from the user terminal, determining whether there is a channel subscriber in a port to which the channel reception information has been input based on the contents of the channel reception information, and then outputting a frame that has a channel MAC address, which is the same as that of the channel reception information, as a destination address to the input port in a case where there is the channel subscriber in the input port.

2. The source specific multicast service providing system of claim 1, wherein a message of the channel reception information represents at least one mode from among a request (ALLOW) for allowing a channel or a channel set, a request (BLOCK) for blocking a. channel or a channel set, a request (TO_IN) for changing a channel or a channel set, and a current state (IS_IN).

3. The source specific multicast service providing system of claim 2, wherein the message of the channel, reception information represents the mode by an attribute event and represents a channel MAC address belonging to the mode by an attribute value.

4. The source specific multicast service providing system of any one of claims 1 to 3, wherein the channel reception information comprises at least one of a destination MAC address, a source MAC address, a length, a logical link control, a protocol ID, the message, an end marker, and a frame check sequence.

5. The source specific multicast service providing system of claim 4, wherein the Ethernet switch filters the channel reception information out of an input frame by using the logical link control and the protocol ID of the channel reception information.

6. A method of providing a source specific multicast service on an Ethernet network, the method comprising:
filtering channel reception information out of an input frame;
checking a state of a subscriber connected to a port to which a message is input based on the message of the channel reception information;
updating an address table that represents a channel MAC address assigned to a port based on the current state of the channel subscriber; and
generating channel reception information based on the current state of the channel subscriber and the contents of the channel reception information and transmitting the generated channel reception information to a router.

7. The method of claim 6, wherein, in the filtering of channel reception information, a frame is identified by using a logical link control and a protocol ID of the channel reception information.

8. The method of claim 6 or 7, wherein the message of the channel reception information represents four modes of a request (ALLOW) for allowing a channel or a channel set, a request (BLOCK) for blocking a channel or a channel set, a request (TO_IN) for changing a channel or a channel set, and a current state (IS_IN) and includes a list of channel MAC addresses corresponding to a channel set of each mode.

9. The method of any one of claims 6 to 8, wherein, in the updating of an address table, when there is a channel that receives a new subscription request (Subscribe), the address table is updated such that a frame having a channel MAC address, which is the same as that of the channel reception information including the new subscription request, as the destination address is output to the port to which the channel reception information including the new subscription request has been input, and when there is a channel that receives a channel releasing request (Unsubscribe), in a case where there is not any other channel subscriber in the port to which the channel reception information including the channel releasing request (Unsubscribe) has been input, an entry is deleted from the address table such that a frame having a channel MAC address, which is the same as that of the channel reception information including the channel releasing request, as the destination address is not output to the input port.
